# EUROPEAN PATENT APPLICATION

(11) **EP 1 617 404 A2**
(43) Date of publication of application: **18.01.2006**
(21) Application number: 05253528.3
(22) Date of filing: 09.06.2005
(51) Int. Cl.: G09G 5/391

(54) **Apparatus for adjusting display size and method thereof**

(30) Priority: 13.07.2004 KR 2004054422
(71) Applicant: SAMSUNG ELECTRONICS CO., LTD., Suwon-si, Gyeonggi-do (KR)
(72) Inventor: Paek, Nam-Ju 9danji Apartment, Yeongtong-gu Suwon-si Gyeonggi-do (KR)
(74) Representative: Brandon, Paul Laurence

(57) **Abstract**

An apparatus of changing a display size and a method thereof in an image recording and reproducing apparatus are provided. The apparatus includes an MPEG decoder (181) for separating a signal reproduced by an optical disc reproducing device and outputting the separated signal; a scaler (182) for changing the size of the signal output from the MPEG decoder and outputting the signal having the changed size; and a control unit (150) for controlling to display a screen-size selection screen on the display device, driving the scaler to change the reproduced image to have a selected screen size, and controlling to display the changed image on the display device, thereby changing the display size. Thus, the screen size can be adjusted when the image quality is significantly deteriorated on a large-sized screen, thereby solving a problem of image spread or pixel damage.

## Description

The present invention relates to apparatus for adjusting a display size and methods thereof, and, more particularly, to apparatus and methods for compensating the quality of an image to be displayed on a screen through the adjustment of the screen size if the image quality is poor.

With the digitalization of a broadcast signal and the development of a compression technique, an image recording and reproducing apparatus capable of recording a multimedia signal and a broadcast signal in a storage medium or reproducing the recorded broadcast signal is being developed to support the use of a variety of image sources, such as satellite broadcast, cable broadcast, Internet network broadcast, and the like. The image recording and reproducing apparatus is configured to store images in an optical medium, such as a CD-ROM or a digital versatile disc (DVD), and to reproduce the stored data. In such an optical medium, an image quality is not deteriorated over use time, and high image quality images and multichannel (e.g., 5.1 channel) audio data can be stored therein. In recent years, therefore, the optical medium has rapidly substituted for a conventional analog image storage medium.

In the case where a moving image (picture) signal stored in such a medium is to be sent as a digital signal, a vast amount of the moving image signal is reduced and sent by high-rate data compression.

A high-resolution image from a video source must be first converted to a low-resolution image of a Common Intermediate Format (CIF), a Quarter CIF (QCIF) or the like, which is primarily used for moving-image communication. Simply decimating each pixel based on a scaling ratio in the conversion to the low-resolution image deteriorates the image quality and thus, a filtering process based on correlations between neighboring pixels is required. The filtering process for preventing the deterioration of the image quality due to the conversion to a desired image size in such a method prior to a moving-image encoding process is called preprocessing.

A related art regarding a method and an apparatus for scaling up or down a video image during the preprocessing process is disclosed in U.S. Patent No. 5,874,937 entitled "Method and apparatus for scaling up and down a video image," in FIGS. 1A and 1B.

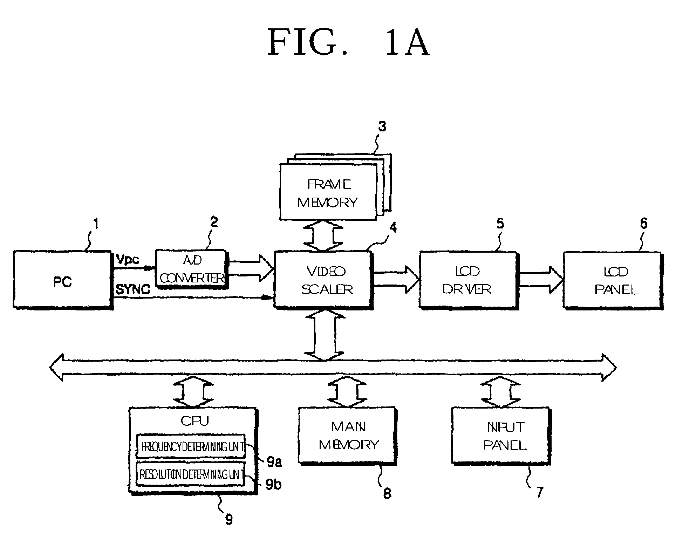

As shown in FIG. 1A, a liquid crystal displayer displays a video image generated by a PC 1 onto a screen. The liquid crystal projector includes a central processing unit (CPU) 9, a main memory 8, an input panel 7 functioning as input part, an analog/digital (A/D) converter 2, a frame memory 3, a video scaler 4, a liquid crystal display (LCD) driver 5, an LCD panel 6, and a light source.

The frame memory 3 includes three memory plates for storing R, G and B signals. The LCD driver 5 and the LCD panel 6 provide the R, G and B signals. The CPU 9 functions as a frequency determining unit 9a for determining a frequency of a synchronization signal (SYNC) provided by the PC 1, and a resolution determining unit 9b for determining resolution based on the synchronization signal (SYNC). The CPU 9 executes computer program codes stored in the main memory 8 to implement the above-stated functions. The A/D converter 2 converts an analog video signal (VPC) generated by the PC 1 to a digital video signal (DPC), and provides the digital video signal (DPC) to the video scaler 4. The video scaler 4 receives the digital video signal (DPC) as well as the synchronization signal (SYNC) output from the PC 1. The video scaler 4 reads a video signal from the frame memory 3 and writes the input digital video signal (DPC) to the frame memory 3 while providing the video signal to the LCD driver 5. In the writing and reading operations, the video scaler 4 scales up or down the video image to match the video image to a standard resolution of the LCD panel 6. The LCD driver 5 reproduces the video image from the video scaler 4 on the LCD panel 6. The video image reproduced on the LCD panel 6 is projected as a color image onto a screen by means of an optical system contained in the light source.

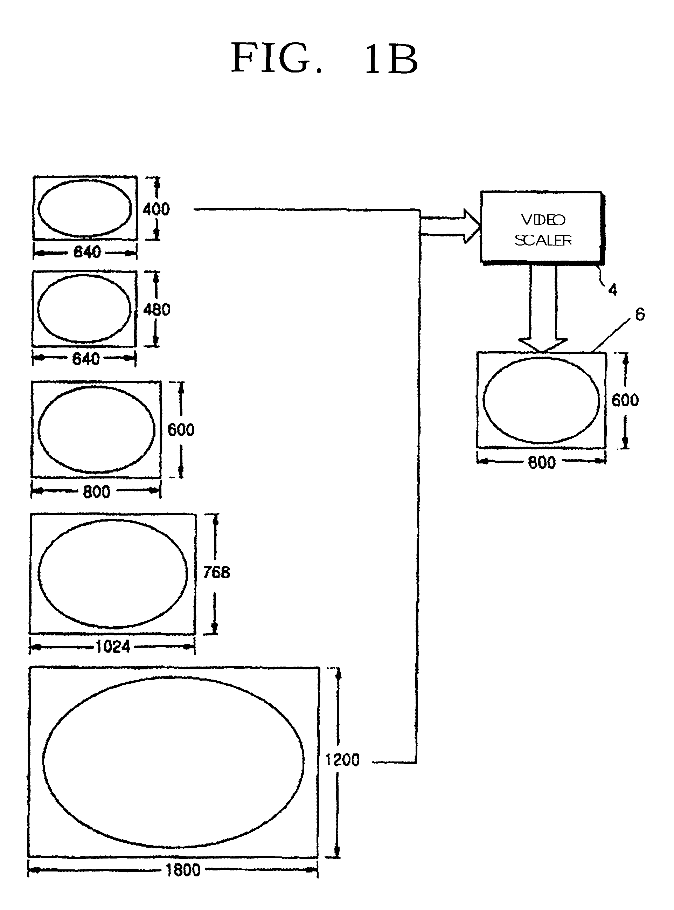

The function of the video scaler will be now described with reference to FIG. 1 B.

The video image is generated with several resolutions (e.g., 640x400, 640x480, 800x600, 1024x768, and 1600x1200) by the PC 1. On the other hand, the standard resolution of the LCD panel 6 is fixed to a predetermined value and is assumed herein to be 800x600. The video scaler 4 scales up or down the input video signal (VPC) in order to generate a video signal having the standard resolution of the LCD panel 6.

If a video signal is generated by PC 1 and is input to the liquid crystal projector, a video image represented by the video signal (VPC) will be produced on the entire screen of the LCD panel. That is, in order to display the image on the display device (i.e., LCD panel) having the 800×600 resolution, the size of the input image must be normally selected from 640x400, 640x480, 800x600, 1024x768, and 1600x1200 because the display device supports only a scaling ratio of a limited image.

There is a problem with the above stated apparatus that only a limited size of an image must be used as the input video because only a specific size of the input video image can be scaled up/down to obtain an output video image having desired resolution.

In particular, because a DIVX player displays an image in an almost fixed screen size (e.g., full screen) while playing back all discs, a deteriorated image is appeared on a screen of a 40 inch or higher size when an original file has low resolution. As a solution for solving this problem, there is a progressive screen (PSO). However, a specification of the PSO can be used for a component output, namely, a National Television System Committee (NTSC) specification, but cannot be used, in particular, for the European SCART output. This is because DIVX files are mainly composed of MPEG4 files and includes files of the above-stated resolution as well as files of lower resolution, such as 176x144, 352x240, 720x480 or the like in pixels.

A predetermined screen ratio is not concerned with a good image quality DVD. However, photographs taken by a digital camera having the small number of pixels, camcorder images, or computer based digital images including MPEG4 of a high compression rate have a predetermined screen ratio when made, and the ratio and image quality may be suitable for the size of a computer monitor but does not guarantee sufficient image quality on a large-sized television (TV). When an image of low resolution is viewed on the large-sized TV, the image quality may be deteriorated and pixels may be viewed in a broken form or a spreading form. The DVD has some limited screen sizes (e.g., 16:9, 4:3, etc.). An image, which has a changed screen size selected by software, is only provided to the TV. This is only intended to implement a screen size of a theater and does not consider the resolution of an image to be displayed. Accordingly, low quality of the image cannot be compensated.

Preferred embodiments of the present invention aim to address the aforementioned problems. It is an aim of preferred embodiments of the present invention to compensate the quality of an image to be displayed on a large-sized screen through the adjustment of the screen size if the image quality is poor.

According to an aspect of the present invention, there is provided a method of displaying an image stored in an optical disc on a display device, the method including steps of reading a resolution of an optical disc data to be reproduced; displaying a screen-size selection screen; and changing the resolution of the optical disc to be reproduced to a size of the selected screen and displaying a resultant image on the display device.

The displaying of the screen-size selection screen may include a step of displaying a guide message screen for selecting any one mode among an auto mode in which an aspect ratio is changed at a uniform ratio inch by inch, a manual mode in which the up, down, left and right of the image are changed manually, and an optimized mode in which the screen size is automatically changed to a prescribed size depending on a recording resolution of the reproduced optical disc data.

Suitably, the resolution of the display device is read, and the reproduced image is displayed in the recording resolution of the reproduced optical disc on the display device when the recording resolution of the reproduced optical disc is lower than the resolution of the display device.

When the manual mode is selected in the displaying the screen-size selection screen, icons displayed on respective up, down, left and right sides of the display device, wherein the icons are composed of manual adjustment arrows. Accordingly, it is possible for a user to change the screen size easily.

According to another aspect of the present invention, there is provided an apparatus for displaying an image stored in an optical disc on a display device, the apparatus including an MPEG decoder for separating a signal reproduced by an optical disc reproducing device and outputting the separated signal; a scaler for changing a size of the signal output from the MPEG decoder and outputting the signal having the changed size; and a control unit for controlling to display a screen-size selection screen on the display device, driving the scaler to change the reproduced image to have a selected screen size, and controlling to display the changed image on the display device. The screen-size selection screen may display a guide message screen for selecting any one mode among an auto mode in which an aspect ratio is changed at a uniform ratio inch by inch, a manual mode in which the up, down, left and right of the image are changed manually, and an optimized mode in which the screen size is automatically changed to a prescribed size depending on the recording resolution of the reproduced optical disc. Accordingly, it is possible for a user to select any one mode and change the screen size easily.

Suitably, the resolution of the display device is read, and the scaler is controlled such that the reproduced image is displayed in the recording resolution of the reproduced optical disc on the display device when the resolution of the reproduced optical disc data is lower than the resolution of the display device. Suitably, the control unit may control to display up, down, left and right menu icons the display device when the manual mode is selected to display the selection menu icons.

Further features of the present invention are set out in the appended claims.

The present invention will become more apparent to those of ordinary skill in the art by describing in detail preferred embodiments thereof by way of example only with reference to the attached drawings; in which:
FIG. 1A is a block diagram of a conventional liquid crystal projector;
FIG. 1 B is a view illustrating a function of a conventional video scaler;
FIG. 2 is a block diagram of a DVD player according to an embodiment of the present invention;
FIG. 3 is a flow diagram illustrating a method of adjusting a screen size for each resolution for reproduction;
FIG. 4A is a view illustrating a GUI screen for adjusting a screen size;
FIG. 4B is a view illustrating a GUI screen for manual adjustment; and
FIG. 5 is a flow diagram illustrating an alternative method of adjusting screen size for each resolution for reproduction.

Reference will now be made in detail to the embodiments of the present invention, examples of which are illustrated in the accompanying drawings, wherein like reference numerals refer to the like elements throughout. The embodiments are described below to explain the present invention by referring to the figures.

Hereinafter, embodiments of the present invention will be described in detail with reference to the accompanying drawings.

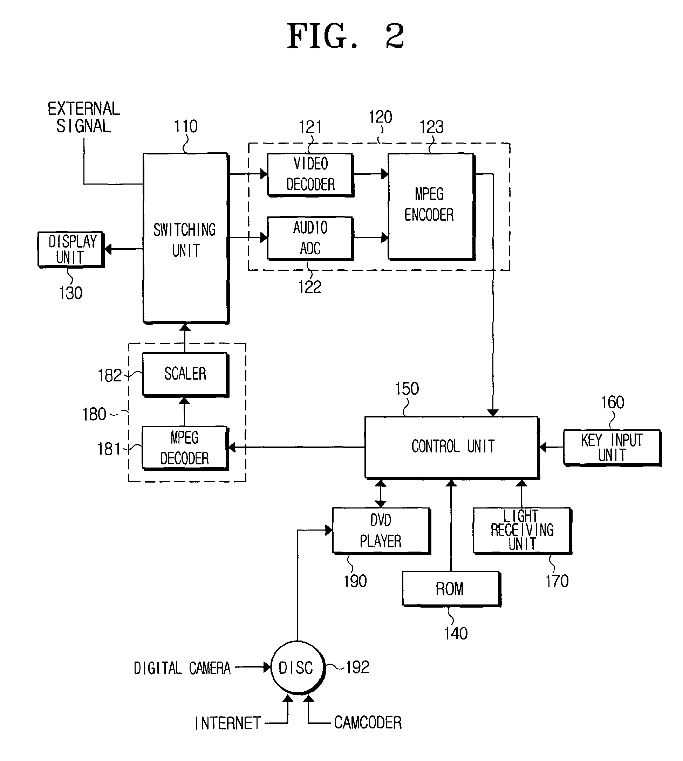

A DVD image recording and reproducing apparatus according to an embodiment of the present invention will be described with reference to FIG. 2. A shown DVD player includes a switching unit 110, an MPEG encoder unit 120, a display device 130, a flash ROM 140, a control unit 150, an RAM 152, a light receiving unit 170, a digital signal processing unit 180, and a DVD player 190.

The switching unit 110 receives a variety of external image data and/or audio data and outputs an image data from the digital signal processing unit 180 to the display device 130. The switching unit 110 receives an external signal, such as a component or composite signal from a video cassette recorder or a broadcasting station (not shown), and selectively transmits the signal to the function blocks in the DVD player. For example, when the external signal from an external device such as the video cassette recorder is the component or composite signal, the switching unit applies the external signal to the MPEG encoder unit 120.

The MPEG encoder unit 120 is composed of a video decoder 121, an audio ADC 122, and an MPEG encoder 123. The MPEG encoder unit 120 converts analog data among image data from the switching unit 110 to digital data, and compresses the digital data into a MPEG format (e.g., MPEG-2 or MPEG-4 format).

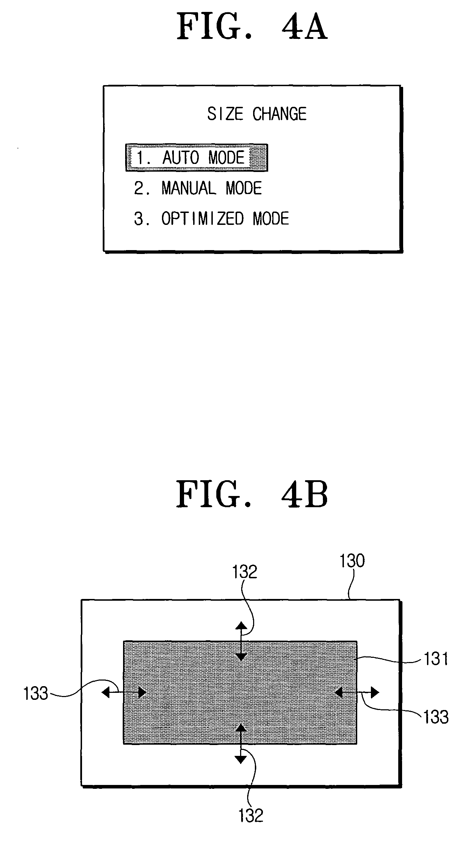

The flash ROM 140 is a program memory for storing the programs used by the control unit. The flash ROM 140 also stores a size change GUI screen (see FIG. 4A) to be displayed by the control of the control unit 150 when a user desires to change the size of the screen, and a GUI screen (see FIG. 4B) for adjusting the up, down, left and right of the screen in a manual mode. The flash ROM 140 also stores an optimal screen display database that allows the image to be displayed in an optimal screen size based on the resolution of the image stored in a disc 192 and the resolution of the display device. That is, the flash ROM 140 stores a conversion table that allows the image to be viewed without picture quality deterioration or the screen being spread when the resolution of the disc 192 to be reproduced is lower than the resolution of the display device. The conversion table will be now discussed with reference to Table 1.

**<Table 1 >**

| Original resolution information | TV size | Output Display Size |
|---|---|---|
| 720x576 or more | X | Full Screen (Scaling Factor: 1) |
| 352×248 ~ 720×576 | X | Full Screen (Scaling Factor: 1) |
| 176x144 - 352x248 | X | Half of Full Screen |
| | | Scaling Factor |
| | | Vertical: 0.5 |
| | | Horizontal: 0.5 |
| 176x144 or less | X | 1/3 of Full Screen |
| | | Scaling Factor |
| | | Vertical: 0.33 |
| | | Horizontal: 0.33 |

Table 1 is a conversion table indicating optimal resolutions of the display device depending on resolution information of an input image as resolution standards of a DIVX File. The control unit 150 reads input image resolution recorded in a header portion of the input image, recognizes an output display size corresponding to the input image resolution from Table 1, and sends a relevant scaling factor to the scaler 182. The scaler 182 will adjust the screen size based on the received scaling factor.

The control unit 150 records an MPEG data output from the MPEG encoder unit 120 on the DVD player 190. In the playback, the control unit 150 reads out data from a file information area and a recording information area of the disc to recognize resolution information, and outputs a relevant scaling factor value in the flash ROM 140 to the scaler 182, so that the image is produced and output in a proper screen ratio. The control unit 150 also controls the scaler 182 so that the user adjusts the screen size into a desired screen size.

The key input unit 160 receives a key input for adjusting the screen size and applies the received key input to the control unit 150.

The light receiving unit 170 receives a control signal (not shown) from a remote control (not shown) for controlling the DVD image recording and reproducing apparatus (e.g., channel switching, volume controlling, image quality adjusting, or the like), and applies the received control signal to the control unit 50.

The digital signal processing unit 180 receives, via the control unit 150, MPEG format image data, which is reproduced from a DVD, and decodes the received image data at the MPEG decoder 181. The scaler 182 receives a signal from the MPEG decoder 181 and processes the received signal based on the scaling factor value received from the control unit 150, so that a low-resolution image is displayed in a small size on the screen and a high-resolution image is displayed in a full screen. The scaler 182 also scales up or down in 4 directions (top, bottom, left and right) or more directions the screen size of the image to be output, under the control of the control unit 150. As in this exemplary embodiment, the scaler may normally process the digital signal and then change that size. Alternatively, the scaler may first change the size and then process the digital signal.

The DVD player 190 is an optical disc reproducing device. The DVD player 190 reproduces video data and/or audio data from the DVD disc, and provides the reproduced video and/or audio data to the digital signal processing unit 180 for scaling. The DVD player 190 also records, on the disc, a signal from the MPEG encoder unit 120.

The disc 192 refers to a disc that stores low-resolution moving images from digital cameras or Internet, camcorder images, and the like.

A method for adjusting a display size using the foregoing configuration will be now described with reference to the accompanying drawings. The detailed discussion on a method capable of adjusting the size of a screen displayed on a typical television receiver and a technique of scaling up or down an image depending on a specific input resolution will be omitted because the method and technique are described in Korean Patent No. 10-0222703 entitled "Method for adjusting a screen size" and Korean Laid-open Patent No. 10-2004-0022737 entitled "Preprocessing circuit and method in a moving image encoder", respectively. That is, the scaler 182 includes an "H Scaler" and a "V Scaler." The H Scaler and the V Scaler are configured to adjust the screen size through the adjustment of H_Sync and V_Sync values when receiving a factor value as data.

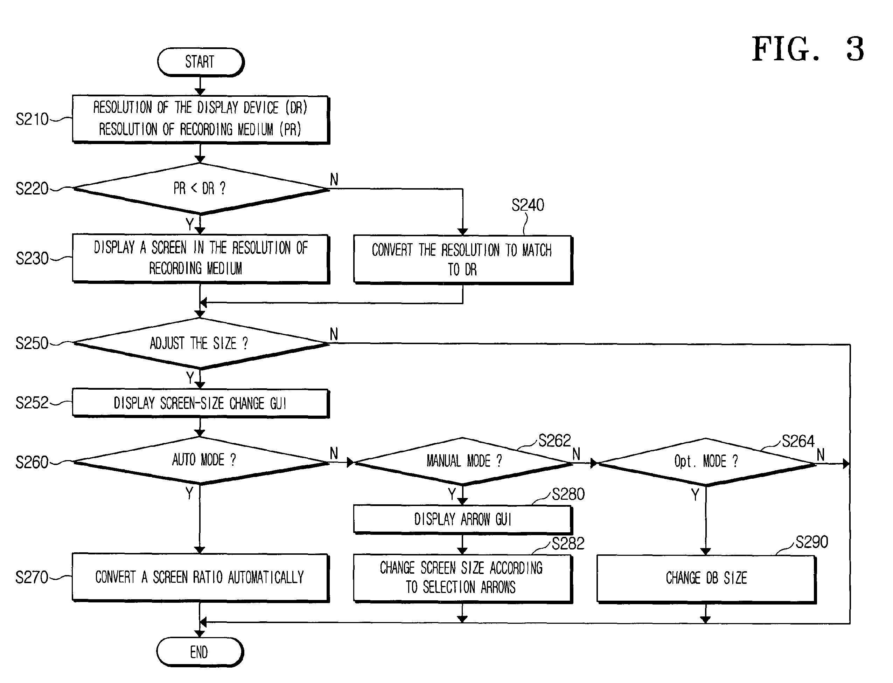

FIG. 3 is a flow diagram illustrating a method of adjusting a screen size for each reproduction resolution according to an embodiment of the present invention. FIGS. 4A and 4B illustrate GUI screens for adjusting the screen size.

Referring to FIG.2 and FIG. 3, if the disc 192 is loaded into the DVD player 190, the control unit 150 receives the resolution of an image to be reproduced (hereinafter, referred to as PR) from a data streaming header in the disc, and also receives the resolution of a display device (hereinafter, referred to as DR) (S21 0).

The control unit 150 compares the received resolutions to each other (S220). If the PR is lower than the DR, the control unit 150 drives the scaler 182 so that the image is displayed in the resolution of the image on the television (TV) 130 (S230). On the contrary, if the PR is higher than the DR, the control unit 150 drives the scaler 182 to scale up or down the image from the disc so that the image resolution matches to that of the display device (TV) (S240). Alternatively, the resolution of an image may be obtained from the disc type. Thus, a scaling ratio can be obtained accordingly. The input image will be scaled up or down based on the scaling ratio between the input image and the display device and be then displayed.

At this time, when receiving a key input from the key input unit 160 for adjusting the size of the image displayed on the display device 130 (S250), the control unit 150 displays the size change GUI (see FIG. 4A) stored in the flash ROM 140 on the display device 130 and waits to receive a key input (S252). The size change GUI is composed of a guide message or prompt by which a user can adjust the screen size in an auto mode, a manual mode or an optimized mode. If it is determined (S260) that an "auto mode" selection key is pressed (S252), the control unit 150 drives the scaler 182 to change the scaling factor value both horizontally and vertically so that the image is displayed on the screen with the screen ratio being automatically changed. In the auto mode, an aspect ratio is incremented or decremented in a predetermined ratio. It is understandable that the image can be automatically scaled up or down from a maximum size (a full screen) to a minimum size (resolution of reproduced image), and an image size to which a user desires to set is determined by the user using a stop key. If it is determined (S262) that a "manual mode" selection key is pressed (S252), manual adjustment arrows 132 and 133 are displayed as icons at respective up, down, left and right sides of the displayed image so that the user can adjust the screen size up and down or left and right to a desired screen size (S280) by essentially dragging the cursor.

Thereafter, if the user selects arrow movement keys on the key input unit 160, the control unit 150 drives the scaler 182 to change the image only by a relevant size and display the changed image (S282). At this time, the control unit 150 drives the scaler 182 to change only a relevant scaling factor value upon movement of the up, down, left and right arrows. That is, if the user moves the up and down arrows, only the "V_Sync" value is changed by a predetermined steps. If the user moves the left and right arrows, only the "H_Sync" value is incremented and decremented by predetermined steps.

Further, if it is determined (S264) that the optimized mode is selected (S252), the control unit 150 receives the reproduction size information from the disc and controls to output the image in an optimal image size in the database (Table 1), which stored in the flash ROM 140.

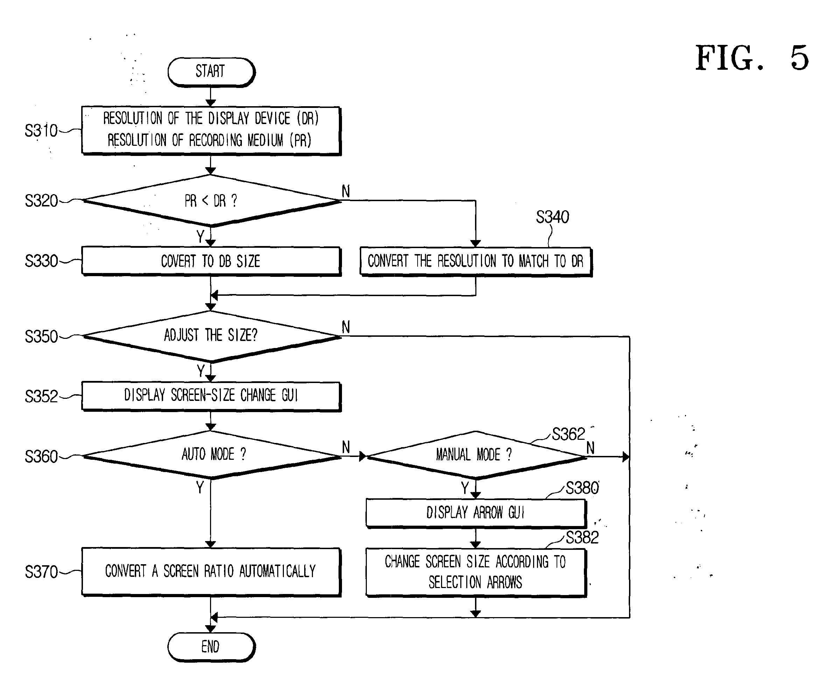

In the embodiment, it has been described that, if it is determined in operation S220 that the resolution of the image is lower than the resolution of the display device, the controller drives the scaler 182 to output the image in the resolution of the image (S230). On the other hand, in FIG. 5, if it is determined in operation S320 that the resolution of the image is lower than the resolution of the display device, the control unit 150 reads the reproduction size information from the disc and controls to output the image in the optimal image size present in the database (Table 1), which is prescribed and stored in the flash ROM 140. Further, if the screen size change GUI is displayed in operation S352, only the auto mode of operation S360 and the manual mode of operation S362 may be displayed. Of course, if the resolution of the image is lower than the resolution of the display device, the image display may be made in the optimized mode, and the screen size adjustment may be made only in both the auto mode and the manual mode.

As described above, with the apparatus for adjusting a display size and the method thereof according to an embodiment of the present invention, it is possible to address a problem of image spread or pixel collapse on the large-sized screen by adjusting the screen size, when the image quality is greatly deteriorated on the screen, like images stored in discs or DVDs having PC based images such as DIVX, MPEG4, WMV, camcorder images, digital camera photograph images, or the like.

Although a few embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of changing a display size in displaying an image stored in a recording medium (192) on a display device (130), the method comprising:
reading a resolution of the image on the recording medium;
changing the display size of the image based on the resolution of the recording medium and a resolution of the display device; and
outputting the display size changed image to the display device.

2. The method of changing a displaying size according to claim 1, further comprising:
displaying a screen-size selection menu screen.

3. The method according to claim 2, wherein the displaying the screen-size selection menu screen comprises:
displaying a guide message menu screen for selecting any one mode among an auto mode and, a manual mode.

4. The method according to any preceding claim, further comprising:
reading the resolution of the display device and controlling to display the image on the display device in the recording resolution of the recording medium when the recording resolution of the recording medium is lower than the resolution of the display device.

5. The method according to any one of claims 1 - 3, further comprising:
reading the resolution of the display device and controlling to display the reproduced image in the resolution of the display device when the recording resolution of the recording medium is higher than the resolution of the display device.

6. The method according to claim 2, wherein the displaying the screen-size selection menu screen further comprises:
displaying icons on up, down, left and right sides of the display device when the manual mode is selected, the icons being composed of manual adjustment arrows.

7. The method according to any preceding claim , wherein the recording medium is an optical disc.

8. The method according to any one of claims 1 - 6, wherein the recording medium is a Random Access Memory (RAM).

9. The method according to any one of claims 1 - 6, wherein the recording medium is ROM (Reading only Memory).

10. The method according to claim 3, wherein the guide message menu screen further comprises:
an optimized menu.

11. The method according to claim 7, wherein the optical disc is a DVD (Digital Versatile Disc) disc.

12. An apparatus of changing a display size in an image recording and/or reproducing apparatus for displaying an image stored in an recording medium (192) on a display device, the apparatus comprising:
an MPEG decoder (181) for separating a signal reproduced by a recording medium reproducing device and outputting the separated signal;
a scaler (182) for changing a displaying size of the separated signal output from the MPEG decoder and outputting the separated signal having the changed size; and
a control unit (150) for controlling to display a screen-size selection menu on the display device, driving the scaler to change the reproduced image to have a selected screen size, and controlling to display the changed image on the display device.

13. The apparatus according to claim 12, wherein the screen-size selection menu screen displays a guide message screen for selecting any one mode among an auto mode in which an aspect ratio is changed at a predetermined ratio, a manual mode the image are changed manually, and an optimized mode in which the screen size is automatically changed to a predetermined size based on the recording resolution of the recording medium.

14. The apparatus according to claim 12 or claim 13, wherein the control unit reads the resolution of the display device, and controls the scaler so that the image is displayed on the display device in the recording resolution of the recording medium when the resolution of the reproduced optical disc is lower than the resolution of the display device.

15. The apparatus according to claim 12 or claim 13, wherein the control unit reads the resolution of the display device, and controls the scaler so that the reproduced image is displayed on the display device in the resolution of the display device when the resolution of the recording medium is higher than the resolution of the display device.

16. The apparatus according to any one of claims 12 - 15, wherein the control unit controls to display icons on up, down, left and right sides of the display device when the manual mode is selected, the icons being composed of manual adjustment arrows.

17. The apparatus according to any one of claims 12 - 16, wherein the recording medium is optical disc.

18. The apparatus according to any one of claims 12 - 16, wherein the recording medium is RAM (Random Access Memory).

19. The apparatus according to any one of claims 12 - 16, wherein the recording medium is ROM (Read Only Memory).

20. The apparatus according to any one of claims 12 - 16, wherein the optical disc is DVD disc.

21. A method of changing a display size in displaying an image stored in recording medium (192) on a display device (130), the method comprising:
storing a conversion table in which a resolution of the display device is selected depending on a resolution of the recording medium;
reading a resolution of the recording medium;
reading the resolution of the display device; and
displaying the image on the display device based on the resolution in the conversion table when the recording resolution of the recording medium is lower than the resolution of the display device.

22. The method according to claim 21, further comprising:
displaying a screen size selection screen; and
changing the resolution of the recording medium to a selected screen size and displaying a changed image on the display device.

23. The method according to claim 22, wherein the displaying the screen-size selection screen comprises:
displaying a guide message menu screen for selecting one mode of an auto mode in which an aspect ratio is changed at a predetermined ratio, and a manual mode.

24. The method according to any one of claims 21 - 23, further comprising:
reading the resolution of the display device and displaying the image in the resolution of the display device on the display device when the recording resolution of the recording medium is higher than the resolution of the display device.

25. The method according to claim 23, wherein displaying the screen-size selection screen further comprises:
displaying icons on up, down, left and right sides of the display device when the manual mode is selected, the icons being composed of manual adjustment arrows.

26. The method according to any one of claims 21 - 25, wherein the recording medium is DVD (Digital Versatile Disc).

27. The method according to claim 22, wherein the screen size of the image in the manual mode is changed by manually.

28. An apparatus of changing a display size in an image recording and reproducing apparatus for displaying an image stored in a recording medium (192) on a display device (130), the apparatus comprising:
a flash ROM (140) for storing a conversion table in which a resolution of the display device is selected depending on a resolution of the recording medium;
an MPEG decoder (181) for separating a signal reproduced by an optical disc reproducing apparatus and outputting the separated signal;
a scaler (182) for changing a size of the signal output from the MPEG decoder and outputting the signal having the changed size; and
a control unit (150) for driving the scaler based on the resolution in the conversion table to control to display the image on the display device when the recording resolution of the recording medium is lower than the resolution of the display device.

29. The apparatus according to claim 28, wherein the control unit (150) displays a screen-size selection menu screen on the display device, and controls the scaler (182) to change the resolution of recording medium to a selected screen size so that the image is displayed on the display device.

30. The apparatus according to claim 28, wherein the screen-size selection screen displays a guide message screen for selecting one mode of an auto mode, and a manual mode the image are changed manually.

31. The apparatus according to claim 30, wherein the apparatus displays icons on up, down, left and right sides of the display device when the manual mode is selected on the screen-size selection screen, the icons being composed of manual adjustment arrows.

32. The apparatus according to any one of claims 28 - 31, wherein the recording medium is an optical disc.

33. The apparatus according to any one of claims 28 - 31, wherein the recording medium is a RAM (Random Access Medium).

34. The apparatus according to any one of claims 28 - 31, wherein the recording medium is a ROM (Read Only Memory).

35. The apparatus according to any one of claims 28 - 31, the optical disc is DVD disc.

36. A method for changing a display size of an image, comprising:
determining an image resolution of an image stored on a recording medium; and
changing a size of a display of the image responsive to a resolution of a display unit and
the image resolution.

37. A method for changing a display size of an image, comprising:
determining an image resolution of an image stored on a recording medium (192); and
changing a size of a display of the image responsive to a resolution of a display unit and
the image resolution using an optimal resolution database.

38. A method for changing a display size of an image, comprising:
determining an image resolution of an image stored on a recording medium (192); and
changing a size of a display of the image responsive to a resolution of a display unit (130) and the image resolution and a mode selection by a user.

39. An apparatus for changing a display size of an image responsive to a perceived quality of the image, the apparatus comprising:
a display (130) having a resolution;
a DVD (192) storing a coded image having a header including a resolution of the image;
a flash ROM (140) storing an optimized conversion table in which a resolution of the display device is selected depending on a resolution of the recording medium and
storing a display menu allowing a user to chose among a manual mode allowing a user to manually adjust a size of a display by dragging size change arrow icons positioned on four sides of the image on the display, an automatic mode where the size of the display is changed to a predetermined size and an optimized mode where the display size is changed responsive to the optimized conversion table contents;
an MPEG decoder (181) decoding the image produced by the DVD;
a scaler unit (182)capable of scaling the image; and
a computer (150) obtaining the image resolution from the DVD, comparing the image resolution and the display resolution, converting the image from the decoder to the display resolution using the scaler unit and displaying the image on the display when the display resolution is greater than the image resolution, and when the display resolution is not greater than the image resolution, displaying the image on the display to allow the user to judge a quality of the image, displaying the menu on the display with the image, allowing the user to select one of the modes based on the quality of the display; changing the size of the image using the scaler unit responsive to the one of the modes selected by the user and displaying the image on the display.
